# EUROPÄISCHE PATENTANMELDUNG

(11) **EP 3 955 435 A1**
(43) Veröffentlichungstag der Anmeldung: **16.02.2022**
(21) Anmeldenummer: 20190302.8
(22) Anmeldetag: 10.08.2020
(51) Int. Cl.: H02K 9/19, H02K 5/20, H02K 9/20, H02K 9/22

(54) **GEHÄUSELOSE ELEKTRISCHE TRAKTIONSMASCHINE**

(71) Anmelder: Traktionssysteme Austria GmbH, 2351 Wiener Neudorf (AT)
(72) Erfinder: WILD, Stefan, 2351 Wiener Neudorf (AT); SAMSTAG, Philipp, 2351 Wiener Neudorf (AT)
(74) Vertreter: SONN Patentanwälte OG

(57) **Zusammenfassung**

Die Erfindung betrifft eine gehäuselose elektrische Traktionsmaschine (1), mit einem aus einem Statorblechpaket (3) aufgebauten Stator (2) und einer Rotorwelle (4) mit einem darauf befestigten, aus einem Rotorblechpaket (6) aufgebauten Rotor (5), wobei das Statorblechpaket (3) zwischen zwei außenliegenden Pressplatten (7, 8) und zumindest einem jeweils ein Lager (24) für die Rotorwelle (4) aufweisenden Lagerschild (29, 30) angeordnet ist, und zwischen den Pressplatten (7, 8) Zugleisten (9) angeordnet sind. Zur Schaffung einer möglichst platzsparenden, aber dennoch leistungsstarken elektrischen Traktionsmaschine (1), insbesondere für den Antrieb von Niederflurschienenfahrzeugen, ist entlang eines Teils des Umfangs des Statorblechpakets (3) zwischen den Pressplatten (7, 8) zumindest ein Kühlkörper (10) mit zumindest einem Kühlkanal (11) zur Führung eines Kühlfluids (K) an der Oberfläche des Statorblechpakets (3) angeordnet.

## Beschreibung

Die Erfindung betrifft eine gehäuselose elektrische Traktionsmaschine, mit einem aus einem Statorblechpaket aufgebauten Stator und einer Rotorwelle mit einem darauf befestigten, aus einem Rotorblechpaket aufgebauten Rotor, wobei das Statorblechpaket zwischen zwei außenliegenden Pressplatten und zumindest einem jeweils ein Lager für die Rotorwelle aufweisenden Lagerschild angeordnet ist, und zwischen den Pressplatten Zugleisten angeordnet sind.

Die vorliegende Erfindung bezieht sich auf gehäuselose elektrische Traktionsmaschinen, also elektrische Antriebsmotoren, vorzugsweise für schienengebundene Fahrzeuge, wie Straßenbahnen oder Eisenbahnen.

Insbesondere bei Niederflurschienenfahrzeugen, welche ein bequemes Ein- und Aussteigen für die Passagiere ermöglichen, steht aufgrund des niedrigen Niveaus des Fußbodens nur sehr wenig Platz für das Fahrgestell, das Getriebe und die Antriebsmotoren zur Verfügung. Bei Schienenfahrzeugen können einzelne Räder oder Radsätze mit jeweils einem Motor angetrieben werden. Dementsprechend umfasst ein Fahrwerk mit vier Rädern üblicherweise zwei oder vier Antriebsmotoren. Da Schienenfahrzeuge meist für zwei Fahrtrichtungen ausgelegt werden, müssen die elektrischen Maschinen für beide Drehrichtungen ausgelegt werden.

Beispielsweise beschreibt die EP 0 548 044 B1 ein Schienenfahrzeug, dessen Drehgestell insbesondere für Niederflurschienenfahrzeuge mit geringer Fußbodenhöhe und somit beschränktem Platz für Fahrwerk, Getriebe und Antriebsmotoren ausgebildet ist. Dabei erfolgt der Antrieb vorzugsweise über Radnabenmotoren, welche direkt unter den Radkästen untergebracht werden.

Bekannte Niederflurschienenfahrzeuge weisen aufgrund der größeren Bauweise der Antriebsmotoren, Getriebe und Drehgestelle Bereiche mit höherer Fußbodenhöhe bzw. Bereiche, welche für die Fahrgäste nicht zur Verfügung stehen, auf, was natürlich Nachteile für die Personenbeförderung, insbesondere im urbanen Gebiet, mit sich bringt.

Neben der Konstruktion von elektrischen Maschinen, welche möglichst klein, aber dennoch möglichst leistungsstark ausgebildet sein sollen, stellt deren Kühlung eine große Herausforderung dar, da die Führung des Kühlfluids und die Abfuhr der Verlustwärme ebenfalls im begrenzten Raumangebot des Niederflurschienenfahrzeugs untergebracht werden muss. Dementsprechend werden Teile der Kühlsysteme auch häufig am Dach des Schienenfahrzeugs platziert.

Beispielsweise beschreibt die CN 1 937 365 A eine wassergekühlte, elektrische Traktionsmaschine für den Antrieb eines Schienenfahrzeugs, welche über ein Gehäuse verfügt und somit eine größere Bauform aufweist, als gehäuselose elektrische Maschinen.

Die Aufgabe der vorliegenden Erfindung besteht daher in der Schaffung einer oben genannten gehäuselosen elektrischen Traktionsmaschine, welche möglichst platzsparend, aber dennoch möglichst leistungsstark ausgebildet ist, sodass insbesondere eine Anwendung als Antriebsmaschine für Niederflurschienenfahrzeuge vorteilhaft ist. Nachteile bekannter elektrischer Maschinen sollen vermieden oder zumindest reduziert werden.

Gelöst wird die erfindungsgemäße Aufgabe dadurch, dass entlang eines Teils des Umfangs des Statorblechpakets und zwischen den Pressplatten zumindest ein Kühlkörper mit zumindest einem Kühlkanal zur Führung eines Kühlfluids an der Oberfläche des Statorblechpakets angeordnet ist. Dadurch, dass nur entlang eines Teils des Umfangs des Statorblechpakets zumindest ein Kühlkörper mit zumindest einem Kühlkanal angeordnet wird, resultiert eine Bauform der gehäuselosen elektrischen Traktionsmaschine, welche in einer Dimension, beispielsweise in der Höhe, geringere Abmessungen aufweist als in der anderen Dimension, beispielsweise der Breite. Somit kann eine gehäuselose elektrische Traktionsmaschine realisiert werden, die besonders platzsparend ist und sich somit für den Antrieb der Schienenräder einer Niederflurstraßenbahn besonders eignet. Der Kühlkörper schließt direkt an die Oberfläche des Statorblechpakets an, wodurch eine optimale Verbindung des Kühlkörpers mit dem Statorblechpaket und somit eine optimale Abführung der Wärme aus dem Statorblechpaket resultiert. Daher soll eine möglichst gute Wärmeleitfähigkeit zur optimalen Abführung der Verlustwärme des Statorblechpakets über das Kühlfluid gegeben sein. Der zumindest eine Kühlkörper weist zumindest einen Kühlkanal zur Führung eines Kühlfluids, also einer Kühlflüssigkeit oder eines Kühlgases, auf, sodass die beim Betrieb der elektrischen Maschine erzeugte Verlustwärme rasch abgeführt werden kann und eine Überhitzung der elektrischen Maschine wirkungsvoll verhindert werden kann. Sofern mehrere Kühlkörper vorgesehen sind, können diese in Serien- oder Parallelschaltung mit dem Kühlfluid versorgt werden. Allfällige Verbindungsleitungen zwischen den Kühlkörpern für das Kühlfluid können bereits in der Konstruktion der elektrischen Maschine integriert sein. Eine Serienschaltung der Kühlkörper kann auch über mehrere elektrische Motoren hinweg erfolgen. Aufgrund der geringen Baugröße der elektrischen Maschine und der niedrigen bewegten Massen des Rotors können besonders hohe Drehzahlen, beispielsweise bis über 12.000 min⁻¹, erreicht werden. Die elektrische Maschine ist vorzugsweise als Asynchronmaschine oder permanentmagneterregte Synchronmaschine ausgeführt. Im Besonderen kann die elektrische Maschine bei Niederflurschienenfahrzeugen so angeordnet werden, dass die Rotorwelle unterhalb der Drehachse des anzutreibenden Schienenrads angeordnet ist. Dies ist aufgrund der geringen Baugröße der elektrischen Maschine möglich und führt zu verbesserten räumlichen Eigenschaften und somit einer niedrigeren erreichbaren Fußbodenhöhe im Schienenfahrzeug.

Vorteilhafterweise sind entlang des Umfangs des Statorblechpakets vier Zugleisten und zwei Kühlkörper über jeweils einen Umfangswinkel von 60° bis 135°, vorzugsweise von im Wesentlichen 90°, zwischen jeweils zwei Zugleisten angeordnet. Bei der Anordnung zweier Kühlkörper über einen derartigen Umfangswinkel resultiert eine besonders niedrige Bauform der gehäuselosen elektrischen Traktionsmaschine. Die symmetrische Anordnung zweier Kühlkörper verbessert die Kühlwirkung.

Der zumindest eine Kühlkanal in jedem Kühlkörper weist zumindest einen Einlass und zumindest einen Auslass für das Kühlfluid auf, und verläuft vorzugsweise mäanderförmig. Durch diese einfache und kostengünstig realisierbare Maßnahme resultiert eine verbesserte Wärmeabfuhr und somit eine optimale Kühlung der elektrischen Maschine, wodurch trotz der geringen Baugröße hohe Leistungsdichten erzielbar sind.

Gemäß einem weiteren Merkmal der Erfindung ist der zumindest eine Kühlkörper mit zumindest einer Zugleiste verbunden. Dadurch wird die Festigkeit der gehäuselosen elektrischen Maschine, insbesondere bei hohen Drehzahlen, gewährleistet.

Die Verbindung zwischen Kühlkörper und Zugleisten kann beispielsweise über entsprechende Befestigungsschrauben oder auch andere Befestigungselemente erfolgen, welche die notwendigen mechanischen Anforderungen erfüllen.

Alternativ zu einer Verbindung jedes Kühlkörpers mit zumindest einer Zugleiste kann jeder Kühlkörper auch mit den Pressplatten verbunden sein. Auch diese Verbindung zwischen Kühlkörper und Pressplatten kann über geeignete Befestigungsschrauben oder Befestigungselemente durchgeführt werden.

Vorteilhafterweise ist jeder Kühlkörper mit dem Statorblechpaket zumindest stellenweise formschlüssig verbunden, um eine optimale thermische Anbindung des Kühlkastens zum Statorblechpaket zu erzielen. Bei dieser Ausführungsvariante wird der Kühlkörper so gestaltet und verarbeitet, dass eine Art Formschluss zwischen der Oberfläche des Statorblechpakets und dem Kühlkörper zustande kommt.

Wenn zwischen jedem Kühlkörper und dem Statorblechpaket eine Wärmeleitfolie angeordnet ist, können Unebenheiten und Toleranzen zwischen dem Statorblechpaket und dem Kühlkörper ausgeglichen und ein besserer thermischer Kontakt zwischen dem Kühlfluid im Kühlkörper und dem Stator der elektrischen Maschine erzielt werden. Die Wärmeleitfolie besteht aus einem Material mit entsprechend guter Wärmeleitung und einer möglichst guten Formanpassung bzw. sogenannter "Gap-Filler"-Eigenschaft. Für die Wärmeleitfolien eignen sich beispielsweise elastomere Schaumstoffe oder Silikonfolien mit Glasfaserverstärkung.

Alternativ zu einer formschlüssigen Verbindung kann jeder Kühlkörper auch mit dem Statorblechpaket stoffschlüssig verbunden sein. Als Verbindungsmethoden eignen sich insbesondere Schweißverfahren oder auch Klebeverfahren.

Die Pressplatten sind im Wesentlichen rechteckig und das Statorblechpaket im Wesentlichen quadratisch ausgebildet. Dadurch ist die elektrische Maschine besonders platzsparend und eignet sich speziell zur Anwendung als Antriebsmotor bei Niederflurschienenfahrzeugen.

Das Kühlfluid ist vorzugsweise durch Kühlwasser, dass allenfalls mit geeigneten Zusätzen versehen ist, gebildet. Theoretisch sind auch Kühlgase denkbar. Über entsprechende Leitungen wird das Kühlfluid zu dem oder den Kühlkörper jeder elektrischen Maschine geleitet und die in der elektrischen Maschine erzeugte Wärme über Wärmetauscher, die beispielsweise am Dach eines Niederflurschienenfahrzeugs angeordnet sein können, abgeführt. Die einzelnen Kühlkörper verschiedener elektrischer Maschinen können in Serie zusammengeschaltet werden, um möglichst kurze Verbindungsleitungen für das Kühlfluid zwischen den elektrischen Maschinen zu erzielen.

An der Antriebsseite der Rotorwelle der gehäuselosen elektrischen Traktionsmaschine kann eine Kupplung zur Verbindung mit einem Getriebe angeordnet sein. Dabei eignet sich beispielsweise eine Bogenzahnkupplung besonders, um etwaige Relativbewegungen zwischen der elektrischen Maschine und dem Getriebe auszugleichen. Andere Ausführungsformen sehen elektrische Maschinen mit nur einer Lagerstelle der Rotorwelle in der elektrischen Maschine selbst und einer zweiten Lagerung mithilfe einer Membrankupplung im Getriebe vor. Weiters kann die Rotorwelle der elektrischen Maschine zusammen mit der Ritzelwelle eines Getriebes in einem Bauteil vereint werden.

Das zumindest eine Lager für die Lagerung der Rotorwelle in dem zumindest einen Lagerschild kann durch ein Schrägkugellager gebildet sein. Derartige an sich bekannte Kugellager eignen sich für die Lagerung der Rotorwelle der elektrischen Maschine besonders, da diese Lager besonders gute Laufeigenschaften im oberen Drehzahlbereich aufweisen.

Wenn im Rotorblechpaket zumindest ein Wärmerohr mit freiem Ende oder in Verbindung mit einem Kühlkörper angeordnet ist, kann der Rotor der elektrischen Maschine zusätzlich gekühlt werden. Derartige sog. "Heatpipes" sind metallene Gefäße länglicher Form, welche ein hermetisch gekapseltes Volumen enthalten, in dem ein Arbeitsmedium, z.B. Wasser oder Ammoniak, enthalten ist, welches das Volumen zu einem kleinen Teil in flüssigen, zum größeren Teil in gasförmigem Zustand ausfüllt. Unter Nutzung der Verdampfungswärme des Mediums können große Wärmemengen auf kleinere Querschnittsflächen transportiert werden. Auf diese Weise kann der Rotor über das zumindest eine Wärmerohr gekühlt werden, indem die Wärme zum freien Ende des Wärmerohrs transportiert wird und dort allenfalls von einem Kühlkörper abgeführt wird.

Die Höhe der gehäuselosen elektrischen Traktionsmaschine liegt vorzugsweise in einem Bereich zwischen 60 mm und 300 mm, die Breite zwischen 60 mm und 300 mm und die Länge zwischen 110 mm und 1000 mm. Derartige Dimensionen eignen sich insbesondere für die Anwendung der elektrischen Maschine als Antriebsmotor bei Niederflurschienenfahrzeugen.

Die Rotorwelle weist vorzugsweise einen Durchmesser von 20 mm bis 100 mm und eine Länge zwischen 100 mm und 980 mm auf. Diese Dimensionen eignen sich insbesondere für einen Antriebsmotor bei Schienenfahrzeugen, insbesondere Niederflurfahrzeugen.

Die vorliegende Erfindung wird anhand der beigefügten Zeichnungen näher erläutert. Darin zeigen:
- Fig. 1: eine perspektivische Prinzipdarstellung einer erfindungsgemäßen gehäuselosen elektrischen Traktionsmaschine;
- Fig. 2: eine weitere perspektivische Ansicht einer erfindungsgemäßen gehäuselosen elektrischen Traktionsmaschine;
- Fig. 3: eine teilweise geschnittene Seitenansicht der gehäuselosen elektrischen Traktionsmaschine gemäß Fig. 2;
- Fig. 4: ein Schnitt durch die gehäuselose elektrische Traktionsmaschine gemäß Fig. 3 entlang der Schnittlinie IV- IV;
- Fig. 5: ein Schnitt durch die gehäuselose elektrische Traktionsmaschine gemäß Fig. 4 entlang der Schnittlinie V - V; und
- Fig. 6: eine perspektivische Prinzipdarstellung einer mit einem Getriebe verbundenen gehäuselosen elektrischen Traktionsmaschine.

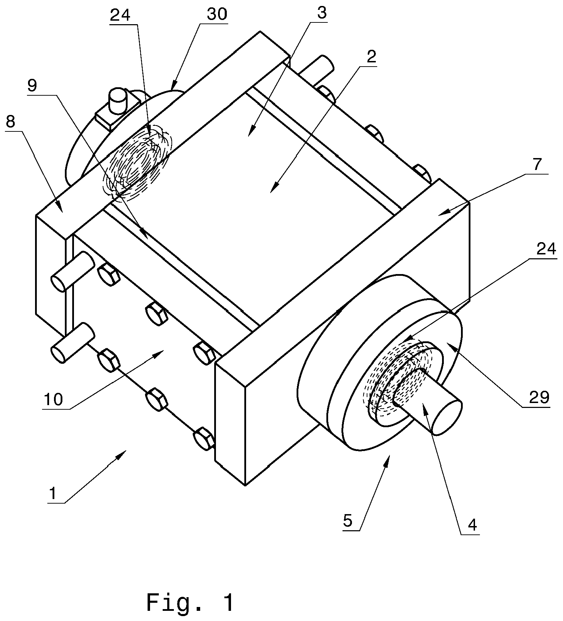

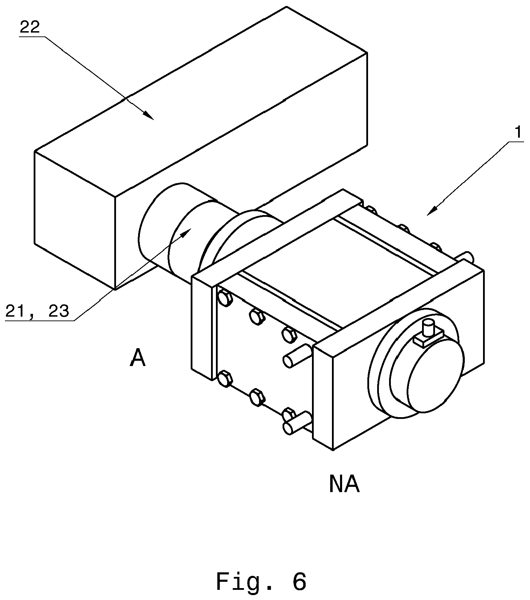

Fig. 1 zeigt eine perspektivische Prinzipdarstellung einer erfindungsgemäßen gehäuselosen elektrischen Traktionsmaschine 1. Die als Innenläufer ausgeführte elektrische Traktionsmaschine 1 besteht aus einem Stator 2, der aus einem entsprechenden Statorblechpaket 3 aufgebaut ist, und einem beweglichen Teil, dem Rotor 5, der aus einer Rotorwelle 4 und einem darauf befestigten Rotorblechpaket 6 aufgebaut ist. Das Statorblechpaket 3 des Stators 2 ist zwischen zwei außenliegenden Pressplatten 7 und 8 angeordnet. Außerhalb der Pressplatten 7 und 8 befindet sich jeweils ein Lagerschild 29 und 30, welches entsprechende Lager 24 (strichliert eingezeichnet) für die Lagerung der Rotorwelle 4 aufweisen. Die elektrische Traktionsmaschine 1 kann auch nur ein Lager 24 in einem Lagerschild 29 oder 30 beinhalten und das zweite Lager für die Rotorwelle 4 kann auch in einer Kupplung 21 oder einem Getriebe 22 (siehe Fig. 6) integriert sein.

Erfindungsgemäß ist entlang eines Teils des Umfangs des Statorblechpakets 3 zwischen den Pressplatten 7 und 8 an der Oberfläche des Statorblechpakets 3 zumindest ein Kühlkörper 10 mit zumindest einem Kühlkanal 11 zur Führung eines Kühlfluids K (nicht dargestellt) angeordnet. Im dargestellten Ausführungsbeispiel sind zwei Kühlkörper 10 vorgesehen. Zwischen den Pressplatten 7, 8 sind Zugleisten 9 angeordnet. Die Kühlkörper 10 können mit den Zugleisten 9 verbunden sein. In jedem Kühlkörper wird in dem zumindest einen Kühlkanal 11 ein Kühlfluid K geführt, um die in der elektrischen Traktionsmaschine 1 erzeugte Wärme abführen zu können.

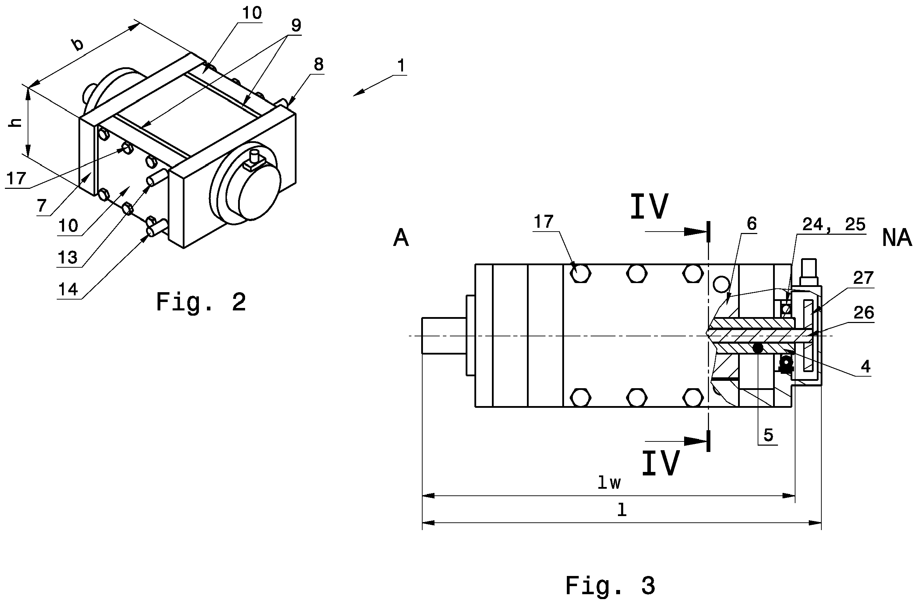

Fig. 2 zeigt eine weitere perspektivische Prinzipdarstellung einer erfindungsgemäßen gehäuselosen elektrischen Traktionsmaschine 1. Erfindungsgemäß resultiert eine elektrische Traktionsmaschine 1, welche eine gegenüber der Breite b verringerte Höhe h aufweist. Über entsprechende Einlässe 13 und Auslässe 14 im Kühlkörper 10 kann das Kühlfluid K in den Kühlkörper 10 und aus dem Kühlkörper 10 heraus gefördert werden. Beispielsweise befindet sich je Kühlkörper 10 ein Einlass 13 für das Kühlfluid K und ein Auslass 14 für das Kühlfluid K. Über Befestigungsschrauben 17 kann der Kühlkörper 10 mit den Zugleisten 9 verbunden werden. Alternativ oder zusätzlich dazu kann eine Befestigung der Kühlkörper auch mit entsprechenden Befestigungsschrauben oder Befestigungselementen an den Pressplatten 7, 8 erfolgen.

In Fig. 3 ist eine teilweise geschnittene Darstellung der gehäuselosen elektrischen Traktionsmaschine 1 gemäß Fig. 2 gezeigt. Hier ist der aus Rotorwelle 4 und Rotorblechpaket 6 bestehende Rotor 5 der elektrischen Traktionsmaschine 1 dargestellt. In der Rotorwelle 4 kann ein Wärmerohr 26 angeordnet sein, dessen freies Ende mit einem Kühlkörper 27 verbunden sein kann. Die Länge lw der Rotorwelle 4 kann zwischen 100 mm und 980 mm betragen. Die Länge l der gesamten elektrischen Maschine beispielsweise zwischen 110 mm und 1000 mm. An der Nichtantriebsseite NA der elektrischen Traktionsmaschine 1 kann ein Drehgeber (nicht dargestellt) angeordnet sein, der zur Regelung der Umdrehungszahl verwendet werden kann. Eine Zahnscheibe, welche die Signale für einen solchen Drehgeber erzeugt, könnte als Kühlkörper 27 für das Wärmerohr 26 verwendet werden.

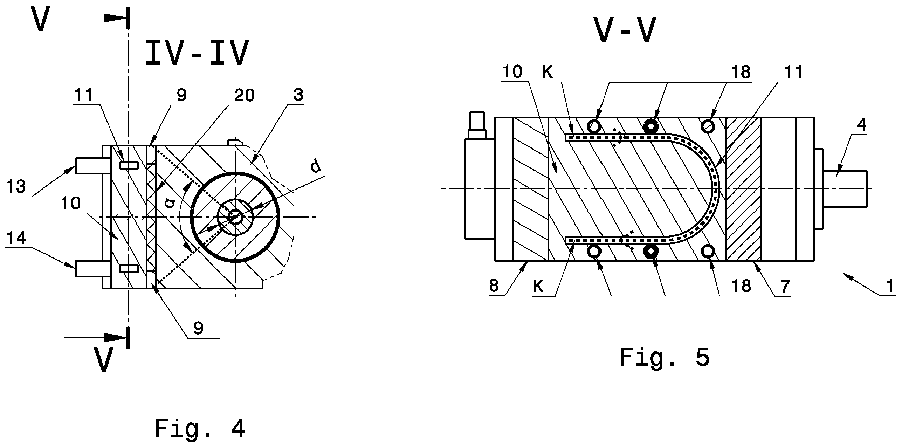

Fig. 4 zeigt das Schnittbild durch die gehäuselose elektrische Traktionsmaschine 1 gemäß Fig. 3 entlang der Schnittlinie IV - IV. Aus diesem Schnittbild ist ein Kühlkörper 10 mit dem Einlass 13 und dem Auslass 14 für die Führung des Kühlfluids K in zumindest einem Kühlkanal 11 ersichtlich. Der Kühlkörper 10 kann über eine Wärmeleitfolie 20 mit dem Statorblechpaket 3 verbunden sein, wodurch die im Statorblechpaket 3 auftretende Wärme an das Kühlfluid K im Kühlkasten 10 abgegeben und entsprechend abgeführt werden kann. Über die Zugleisten 9 zwischen den Pressplatten 7, 8 wird der elektrischen Traktionsmaschine 1 die notwendige Festigkeit verliehen. Im dargestellten Ausführungsbeispiel erstreckt sich der Kühlkörper 10 über einen Umfangswinkel α von etwas weniger als 90°. Der Durchmesser d der Rotorwelle 4 beträgt beispielsweise 20 mm bis 100 mm.

Fig. 5 zeigt das Schnittbild durch die gehäuselose elektrische Traktionsmaschine 1 gemäß Fig. 4 entlang der Schnittlinie V - V. Das Kühlfluid K gelangt über den Einlass 13 in den Kühlkanal 11 des Kühlkörpers 10 und wird über einen Auslass 14 wieder abgeführt. Über die Bohrungen 18 erfolgt mit Hilfe von entsprechenden Befestigungsschrauben 17 (siehe Fig. 2 und 3) eine Befestigung des Kühlkörpers 10 an den Zugleisten 9 (nicht dargestellt). Schließlich ist in Fig. 6 eine perspektivische Prinzipdarstellung einer mit einem Getriebe 22 verbundenen gehäuselosen elektrischen Traktionsmaschine 1 wiedergegeben. An der Antriebsseite A der Rotorwelle 4 kann eine Kupplung 21 zur Verbindung mit einem Getriebe 22 vorgesehen sein. Die Kupplung 21 kann beispielsweise durch eine Bogenzahnkupplung 23 realisiert werden.

## Patentansprüche

1. Gehäuselose elektrische Traktionsmaschine (1), mit einem aus einem Statorblechpaket (3) aufgebauten Stator (2) und einer Rotorwelle (4) mit einem darauf befestigten, aus einem Rotorblechpaket (6) aufgebauten Rotor (5), wobei das Statorblechpaket (3) zwischen zwei außenliegenden Pressplatten (7, 8) und zumindest einem jeweils ein Lager (24) für die Rotorwelle (4) aufweisenden Lagerschild (29, 30) angeordnet ist, und zwischen den Pressplatten (7, 8) Zugleisten (9) angeordnet sind, **dadurch gekennzeichnet, dass** entlang eines Teils des Umfangs des Statorblechpakets (3) zwischen den Pressplatten (7, 8) zumindest ein Kühlkörper (10) mit zumindest einem Kühlkanal (11) zur Führung eines Kühlfluids (K) an der Oberfläche des Statorblechpakets (3) angeordnet ist.

2. Gehäuselose elektrische Traktionsmaschine (1) nach Anspruch 1, **dadurch gekennzeichnet, dass** entlang des Umfangs des Statorbleckpakets (3) vier Zugleisten (9) und zwei Kühlkörper (10) über jeweils einen Umfangswinkel (α) von 60° bis 135°, vorzugsweise von im Wesentlichen 90°, zwischen jeweils zwei Zugleisten (9) angeordnet sind.

3. Gehäuselose elektrische Traktionsmaschine (1) nach Anspruch 1 oder 2, **dadurch gekennzeichnet, dass** der zumindest eine Kühlkanal (11) in jedem Kühlkörper (10) zumindest einen Einlass (13) und zumindest einen Auslass (14) für das Kühlfluid (K) aufweist, und dass der zumindest eine Kühlkanal (11) vorzugsweise mäanderförmig verläuft.

4. Gehäuselose elektrische Traktionsmaschine (1) nach einem der Ansprüche 1 bis 3, **dadurch gekennzeichnet, dass** der zumindest eine Kühlkörper (10) mit zumindest einer Zugleiste (9) verbunden ist.

5. Gehäuselose elektrische Traktionsmaschine (1) nach Anspruch 4, **dadurch gekennzeichnet, dass** jeder Kühlkörper (10) über Befestigungsschrauben (17) mit zumindest einer Zugleiste (9) verbunden ist.

6. Gehäuselose elektrische Traktionsmaschine (1) nach einem der Ansprüche 1 bis 5, **dadurch gekennzeichnet, dass** jeder Kühlkörper (10) mit den Pressplatten (7, 8) verbunden ist.

7. Gehäuselose elektrische Traktionsmaschine (1) nach einem der Ansprüche 1 bis 6, **dadurch gekennzeichnet, dass** jeder Kühlkörper (10) mit dem Statorblechpaket (3) zumindest stellenweise formschlüssig verbunden ist.

8. Gehäuselose elektrische Traktionsmaschine (1) nach einem der Ansprüche 1 bis 7, **dadurch gekennzeichnet, dass** zwischen jedem Kühlkörper (10) und dem Statorblechpaket (3) eine Wärmeleitfolie (20) angeordnet ist.

9. Gehäuselose elektrische Traktionsmaschine (1) nach einem der Ansprüche 1 bis 6, **dadurch gekennzeichnet, dass** jeder Kühlkörper (10) mit dem Statorblechpaket (3) zumindest stellenweise stoffschlüssig verbunden ist.

10. Gehäuselose elektrische Traktionsmaschine (1) nach einem der Ansprüche 1 bis 9, **dadurch gekennzeichnet, dass** die Pressplatten (7, 8) im Wesentlichen rechteckig und das Statorblechpaket (3) im Wesentlichen quadratisch ausgebildet sind.

11. Gehäuselose elektrische Traktionsmaschine (1) nach einem der Ansprüche 1 bis 10, **dadurch gekennzeichnet, dass** das Kühlfluid (K) durch Kühlwasser gebildet ist.

12. Gehäuselose elektrische Traktionsmaschine (1) nach einem der Ansprüche 1 bis 11, **dadurch gekennzeichnet, dass** an der Antriebsseite (A) der Rotorwelle (4) eine Kupplung (21) zur Verbindung mit einem Getriebe (22), vorzugsweise eine Bogenzahnkupplung (23), angeordnet ist.

13. Gehäuselose elektrische Traktionsmaschine (1) nach einem der Ansprüche 1 bis 12, **dadurch gekennzeichnet, dass** das zumindest eine Lager (24) in dem zumindest einen Lagerschild (29, 30) durch ein Schrägkugellager (25) gebildet ist.

14. Gehäuselose elektrische Traktionsmaschine (1) nach einem der Ansprüche 1 bis 13, **dadurch gekennzeichnet, dass** im Rotorblechpaket (6) zumindest ein Wärmerohr (26) mit freiem Ende oder in Verbindung mit einem Kühlkörper (27) zur Kühlung des Rotors (3) angeordnet ist.
